# EUROPÄISCHE PATENTSCHRIFT

(11) **EP 2 719 284 B1**
(45) Veröffentlichungstag und Bekanntmachung des Hinweises auf die Patenterteilung: **31.08.2016**
(21) Anmeldenummer: 13187633.6
(22) Anmeldetag: 08.10.2013
(51) Int. Cl.: A22C 11/02, A22C 13/00, B29C 47/00, B29C 47/12

(54) **Vorrichtung und Verfahren zum Herstellen eines Stranges aus einer pastösen Masse**
Device and method for forming a strand of a pasty material
Dispositif et procédé de fabrication d'un boudin à partir d'une masse pâteuse

(30) Priorität: 15.10.2012 DE 202012009795 U
(43) Veröffentlichungstag der Anmeldung: 16.04.2014
(73) Patentinhaber: VEMAG Maschinenbau GmbH, 27283 Verden/Aller (DE)
(72) Erfinder: Thelen, Christoph, 21258 Heidenau (DE); Baris, Halis, 27313 Dörverden (DE); Janke, Stephan, 27308 Kirchlinteln (DE)
(74) Vertreter: Eisenführ Speiser

(56) Entgegenhaltungen:
- EP-A1- 2 016 830
- WO-A1-89/00910
- WO-A1-2011/087359
- US-A- 5 853 770

## Beschreibung

Die vorliegende Erfindung bezieht sich auf eine Vorrichtung und ein Verfahren zum Herstellen eines Stranges aus einer pastösen Masse, wie Wurstbrät oder dergleichen.

Die Erfindung betrifft insbesondere eine Vorrichtung mit zumindest einem Extrusionskopf, der wenigstens eine Förderleitung für die zu einem Strang zu formende pastöse Masse aufweist, wobei die Förderleitung einen Einlass und einen Auslass aufweist, und der eine Aufnahmekammer für ein auf den Strang aufzubringendes Hüllmaterial aufweist, wobei die Aufnahmekammer einen Einlauf für das Hüllmaterial und einen Auslauf zum Aufbringen des Hüllmaterials auf die Strangoberfläche aufweist.

Vorrichtungen und Verfahren vorbezeichneter Gattung werden üblicherweise zur Herstellung von Würstchen eingesetzt, deren äußere Hülle aus Kollagen oder Alginat erzeugt wird. Die pastöse Masse, insbesondere das Wurstbrät, wird in der Regel in einem Fülltrichter einer Herstellungsmaschine für Würstchen bereitgehalten und über einen Extrusionskopf zu einem bevorzugt kontinuierlichen Wurstbrät-Strang verarbeitet. Um den Wurstbrät-Strang eine entsprechende Festigkeit zu verleihen und damit ein ungewolltes Brechen des Stranges und/oder des letztendlich daraus hergestellten Würstchens zu vermeiden, wird auf die Strangoberfläche ein Hüllmaterial aufgebracht, wie zum Beispiel Kollagen oder Alginat. Kollagen und Alginat sind fließfähige Hüllmaterialien, die nach dem Aufbringen auf die Strangoberfläche, bereits nach kurzer Zeitdauer verfestigen und eine feste Hülle auf dem Wurstbrät-Strang ausbilden.

Bekannte Vorrichtungen weisen zumindest einen Extrusionskopf mit wenigstens einer Förderleitung für die zu einem Strang zu formende pastöse Masse auf. Die Förderleitung weist einen Einlass für die noch unförmige pastöse Masse und einen Auslass für die dann zu einem Strang geformte Masse auf. Entlang eines Abschnittes der Förderleitung ist häufig eine den Förderleitungs-Abschnitt umgebende Aufnahmekammer vorgesehen, in der das Hüllmaterial vor dem Aufbringen auf die Strangoberfläche eingebracht wird. Zu diesem Zweck weist die Aufnahmekammer einen Einlauf für das Hüllmaterial in die Kammer und einen Auslauf zum Aufbringen des Hüllmaterials auf die Strangoberfläche auf. Der Auslass ist dabei üblicherweise entlang des gesamten Umfanges, des häufig einen etwa zylindrischen Querschnitt aufweisenden Stranges ausgebildet, so dass der gesamte Umfang des Stranges mit dem Hüllmaterial überzogen werden kann.

Aus der EP 1 371 293 B1 oder der WO 99/22600 A sind Vorrichtungen zum Herstellen eines Stranges aus einer pastösen Masse mit jeweils einem Extrusionskopf bekannt, wonach eine die Förderleitung umgebende Aufnahmekammer mit einem ringspaltförmigen Auslass vorgesehen ist. Die Aufnahmekammer weist einen radial an der Außenwandung der Aufnahmekammer angeschlossenen Einlauf auf, über den das Füllmaterial, wie z. B. Kollagen, in die Aufnahmekammer eingebracht wird. Beim Auftragen des Füllmaterials auf die Strangoberfläche besteht die grundlegende Anforderung, eine Hülle mit einer gleichmäßigen Dicke oder Stärke auf der Strangoberfläche zu erzeugen. An den bekannten Vorrichtungen können gegebenenfalls Druckschwankungen innerhalb der Aufnahmekammer auftreten, wodurch das Hüllmaterial, bezogen auf den Strangumfang, Dickenschwankungen unterliegen kann. Gegebenenfalls kann es sogar auf der Strangoberfläche zu Fehlstellen des Hüllmaterials kommen, was im ungünstigsten Falle dann zu einem Abriss des Wurstbrät-Stranges führen kann. Zudem kann die auftretende Problematik mit der Verwendung unterschiedlicher Hüllmaterialien verstärkt werden, welche verschiedene Viskositäten und damit bedingt unterschiedliche Fließeigenschaften aufweisen.

Des Weiteren ist aus WO 2011/087359 A1 eine Vorrichtung zum Herstellen eines Wurststranges mit einem Extrusionskopf bekannt. Der Extrusionskopf umfasst eine Förderleitung für die zu einem Strang zu formende Masse, deren Auslass ein Extrusionsring für ein auf die Oberfläche des zu erzeugenden Wurststranges aufzubringendes Hüllmaterial zugeordnet ist. Der Extrusionsring bildet den Auslass einer Aufnahmekammer für das Hüllmaterial, welche ringförmig um die Förderleitung herum ausgebildet ist. Der Einlauf für das Hüllmaterial ist an der Umfangsfläche des Extrusionskopfes angeordnet.

Der Erfindung liegt daher die Aufgabe zugrunde, eine Vorrichtung und ein Verfahren zum Herstellen eines Stranges aus einer pastösen Masse aufzuzeigen, mit denen eine zuverlässig gleichmäßigere Beschichtung der Strangoberfläche mit dem Hüllmaterial möglich ist. Insbesondere sollen die Vorrichtung und das Verfahren dazu geeignet sein, Hüllmaterialien mit unterschiedlichen Eigenschaften in gleicher, vorteilhafter Weise verarbeiten zu können.

Die Erfindung löst die ihr zugrunde liegende Aufgabe bei einer Vorrichtung gemäß Anspruch 1 dadurch, dass die Aufnahmekammer Mittel aufweist, die eingerichtet sind, um das Hüllmaterial beim Durchströmen der Aufnahmekammer in eine im Wesentlichen spiralförmigen Bewegung mit einer rotatorischen Bewegungskomponente und zusätzlich einer axialen Bewegungskomponente um zumindest eine Längsachse der Aufnahmekammer herum zu versetzen.

Der Erfindung liegt die Erkenntnis zugrunde, dass das Erzeugen einer Bewegung des Hüllmateriales mit zumindest einer rotatorischen Bewegungskomponente, um zumindest eine Längsachse der Aufnahmekammer herum, beim Durchströmen der Aufnahmekammer, eine vorteilhaft gleichmäßige Druckverteilung über den gesamten Auslauf der Aufnahmekammer bewirkt. Mögliche Druckschwankungen am Auslass sind dadurch mit Vorteil vermieden, wodurch eine durchgängige Ummantelung mit bevorzugt gleichmäßiger Schichtdicke des Hüllmateriales auf der Strangoberfläche gewährleistet ist. Der Strang und auch die daraus herzustellenden Würstchen haben zum einen ein vorteilhaft gleichmäßiges Erscheinungsbild und zum anderen ist ein ungewolltes Brechen des Stranges an einem nicht zur Teilung vorgesehenen Teilstück, aufgrund einer unzureichenden Beschichtung eines Strangabschnittes mit dem Hüllmaterial, mit Vorteil vermieden. Bevorzugt führt das Hüllmaterial beim Durchströmen der Aufnahmekammer eine Bewegung mit einer rotatorischen und einer translatorischen, axialen Bewegungskomponente aus. Damit ist eine vornehmlich spiralförmige Bewegung des Hüllmateriales innerhalb der Aufnahmekammer umgesetzt. Mit der erfindungsgemäßen Lösung lassen sich ebenfalls Hüllmaterialien mit unterschiedlichen Viskositäten problemlos verarbeiten. Deren unterschiedliche Fließeigenschaften haben auf die Druckverteilung in der Aufnahmekammer keinen nennenswerten Einfluss mehr.

Unter den Begrifflichkeiten, "mit zumindest einer rotatorischen Bewegungskomponente, um zumindest eine Längsachse der Aufnahmekamer herum", ist im vorliegenden Fall vorzugsweise das Erzeugen einer (Zwangs-) Strömung des Hüllmateriales um die Längsachse der Aufnahmekammer mit einem Winkelmaß von mehr als 180° zu verstehen. Vorzugsweise führt das Hüllmaterial wenigstens eine komplette Rotationsbewegung um 360° aus, bevor es am Auslass der Aufnahmekammer anlangt und über diesen austritt. Als geeignetes Mittel zum Erzeugen einer derartig rotatorischen Bewegungskomponente kann z. B. innerhalb der Aufnahmekammer eine Führungseinrichtung Anwendung finden, womit sich das Hüllmaterial beim Durchströmen der Aufnahmekammer in eine Bewegung mit einer Vorzugsrichtung versetzen lässt.

Mit Vorteil ist, nach einer Weiterbildung der Erfindung vorgesehen, dass der Einlauf an der äußeren Kammerwandung der Aufnahmekammer angeordnet ist, derart, dass dessen Mittenachse einen Versatz zur Längsachse der Aufnahmekammer aufweist. Eine derartige Anordnung des Einlaufs an der Aufnahmekammer stellt eine bevorzugte Möglichkeit zur Ausbildung eines der Mittel an der Aufnahmekammer dar, mit denen das Hüllmaterial beim Durchströmen der Aufnahmekammer in eine Bewegung mit einer rotatorischen Bewegungskomponente versetzt werden kann. Aufgrund der versetzten, insbesondere asymmetrischen Anordnung des Einlaufs an der äußeren Kammerwandung der Aufnahmekammer ist eine Zwangsbewegung des Hüllmateriales entlang z. B. der äußeren, zylindrischen Kammerwandung der Aufnahmekammer bewirkt. Dabei ist der Einlauf derart an der äußeren Kammerwandung angeordnet, dass das Hüllmaterial unmittelbar beim Eintreten in die Aufnahmekammer insbesondere eine Bewegung um die Längsachse der Aufnahmekammer ausführt, die eine ausschließlich rotatorische Bewegungskomponente aufweist.

Der Versatz zwischen der Mittenachse des Einlaufes und der Längsachse der Aufnahmekammer entspricht vorzugsweise wenigstens der Hälfte des freien Querschnitts des Einlaufes, womit auf vorteilhafte Weise sichergestellt ist, dass das Hüllmaterial beim Durchströmen der Aufnahmekammer die erfindungsgemäße Bewegung umsetzt. Aufgrund des Versatzes um wenigstens die Hälfte des freien Querschnittes des Einlaufes, ist zudem eine ungewollte Durchströmungsbewegung des Hüllmaterials entgegen der beabsichtigten Vorzugsrichtung innerhalb der Aufnahmekammer vermieden. Unter einem Versatz zwischen der Mittenachse des Einlaufs und der Längsachse der Aufnahmekammer ist zum einen ein ausschließlich seitlicher Versatz des Einlaufs quer zur Längsachse der Aufnahmekammer zu verstehen. Zum anderen ist mit einem Versatz ebenfalls eine abgewinkelte beziehungsweise schräge Anordnung eines an sich geradlinigen Einlaufs um ein vorbestimmtes Winkelmaß an der äußeren Kammerwandung der Aufnahmekammer gemeint.

Alternativ ist zu einem Versatz zwischen der Mittenachse des Einlaufs und der Längsachse der Aufnahmekammer nach einer Weiterbildung der Erfindung vorgesehen, dass im Einlaufbereich der Aufnahmekammer wenigstens ein Umlenkelement zum Erzeugen der teilweise rotatorischen Bewegung des in die Aufnahmekammer einströmenden beziehungsweise einlaufenden Füllmaterials angeordnet ist. Mithilfe solcher Umlenkelemente, lässt sich ebenfalls eine vorteilhaft gezielte Umlenkung des in die Aufnahmekammer einströmenden Hüllmaterials erreichen. Der Einsatz von Umlenkelementen im Einlaufbereich kann speziell dann von Vorteil sein, wenn sich der Einlauf, aufgrund von technischen Anforderungen, nicht asymmetrisch an der äußeren Kammerwandung der Aufnahmekammer anordnen lässt.

Das Umlenkelement kann zu diesem Zweck beispielsweise in einem Endbereich innerhalb des Einlaufs oder mindestens teilweise in die Aufnahmekammer vorstehend am Einlauf angeordnet sein. Mit einem derartig erfindungsgemäß angeordneten Umlenkelement lässt sich bereits innerhalb des Einlaufs eine gezielte Führung des in die Aufnahmekammer einzubringenden Hüllmaterials vornehmen. Eine Fehlleitung des in die Aufnahmekammer eingeführten Hüllmaterials lässt sich somit relativ einfach vermeiden. Mit dem wenigsten einen Umlenkelement wird beispielsweise der Einlauf in mehrere Führungskanäle für das Hüllmaterial unterteilt. Die zur Anwendung kommenden Umlenkelemente können beispielsweise nur im Bereich des Einlaufs oder auch nur in der Aufnahmekammer angeordnet sein.

Das insbesondere im Einlaufbereich der Aufnahmekammer zum Einsatz kommende Umlenkelement kann insbesondere als Leitschaufel mit einer konkav gewölbten Leitfläche ausgebildet sein. Mit der Verwendung einer Leitschaufel als Umlenkelement, ist eine konstruktiv einfache Möglichkeit zum Umlenken des Hüllmateriales innerhalb der Aufnahmekammer der erfindungsgemäßen Vorrichtung geschaffen. Mithilfe der Leitschaufel, die in Erstreckungsrichtung eine gleichmäßig oder auch ungleichmäßig gewölbte Leitfläche aufweisen kann, lässt sich das über den Einlauf in die Aufnahmekammer einströmende Hüllmaterial stets vorteilhaft in eine Bewegung mit zumindest einer rotatorischen Bewegungskomponente um die Längsachse der Aufnahmekammer herum bzw. entlang einer den Strang aus pastöser Masse umgebenden Kammerwandung der Aufnahmekammer versetzen.

Ein mit einem Umlenkelement ausgerüsteter Einlauf ist insbesondere ein sich im Wesentlichen radial zur Längsachse der Aufnahmekammer erstreckender Anschlussstutzen. Über einen als Anschlussstutzen ausgebildeten Einlauf, dessen Mittenachse über zumindest einen vorbestimmten Abschnitt radial zur Längsachse der Aufnahmekammer ausgerichtet ist, lässt sich eine relative einfache Versorgung mit dem Hüllmaterial realisieren. Zu diesem Zweck ist der Anschlussstutzen und damit die Aufnahmekammer des erfindungsgemäßen Extrusionskopfes eingerichtet, mit einer das Hüllmaterial führenden Versorgungsleitung medienleitend gekoppelt beziehungsweise verbunden zu werden. Die medienleitende Verbindung zwischen Anschlussstutzen und Versorgungsleitung kann z. B. mittels einer Schraubverbindung oder einer Steck-Dreh-Verbindung hergestellt werden. Selbstverständlich kann auch der mit seiner Mittenachse einen Versatz zur Längsachse der Aufnahmekammer aufweisende Einlauf, als Anschlussstutzen, für eine medienleitende Verbindung, mit einer das Hüllmaterial fördernden Versorgungsleitung ausgebildet sein.

Bevorzugt weist der mit seiner Mittenachse im Wesentlichen radial zur Längsachse der Aufnahmekammer verlaufende Einlauf in seinem Einlaufbereich der Aufnahmekammer ein um ein vorbestimmtes Winkelmaß gekrümmtes oder abgewinkeltes Teilstück auf, wobei die Zentralachse des gekrümmten oder abgewinkelten Teilstückes etwa quer zur Längsachse der Aufnahmekammer ausgerichtet ist. Das Umlenkelement ist somit, anstatt als zusätzlich im Einlaufbereich anzuordnende Führungsteile, ein Abschnitt beziehungsweise ein Teil des Einlaufes selbst, wodurch eine konstruktiv vereinfache Ausgestaltung umgesetzt ist. Ein solches Teilstück, das insbesondere gekrümmt, bzw. gebogen ist oder auch geradlinig ausgebildet ein kann, weist mit seiner Zentralachse im Übergangsbereich zur Aufnahmekammer einen Winkelversatz von etwa 10° bis 60° zur Mittenachse des im Wesentlichen radial zur Aufnahmekammer verlaufenden Einlaufabschnittes auf.

Gemäß einer weiteren, vorteilhaften Ausführungsform ist der Einlauf mittels eines Rohrstückes ausgebildet, wobei das Verhältnis zwischen Außendurchmesser der Aufnahmekammer und dem Durchmesser des Rohrstückes etwa 2:1 beträgt. Mit dem gewählten Verhältnis der Durchmesser zueinander ist ein vorteilhaftes Einströmverhalten des Hüllmateriales in die Aufnahmekammer gewährleistet. Das in die Aufnahmekammer einströmende Hüllmaterial erhält somit stets seine bevorzugt erfindungsgemäße Bewegungsrichtung, sodass sich nahezu die gesamte Masse des in der Aufnahmekammer befindlichen Hüllmateriales mit einem gleichgerichteten Drehsinn spiralförmig um die Längsachse der Aufnahmekammer bewegt. Vorzugsweise ist sowohl das einen Versatz zur Längsachse aufweisende Rohrstück als auch das mit einem Umlenkelement ausgerüstete Rohrstück derart an der äußeren Kammerwandung angeordnet, dass deren freien Ausström-Querschnitte bezogen auf eine quer zur Ausströmrichtung verlaufenden Ebene, die gleichzeitig durch die Längsachse verläuft, in der abgebildeten Ebene zwischen der Längsachse und der äußeren Kammerwandung liegen.

Die das Hüllmaterial aufnehmende Aufnahmekammer weist insbesondere die Form eines Ringraumes auf, an dessen äußerer Kammerwandung der Einlauf und an dessen einer der seitlichen, kreisringförmigen Kammerwandung der Auslauf für das Hüllmaterial angeordnet sind. Mit der Ausgestaltung der Aufnahmekammer als Ringraum ist eine vorteilhafte konstruktive Möglichkeit geschaffen, um einen geformten Strang aus pastöser Masse, wie z. B. aus Wurstbrät, über die gesamten Strangoberfläche gleichzeitig mit dem Hüllmaterial überziehen zu können. Zu diesem Zweck ist der Auslauf der Aufnahmekammer insbesondere an einer seitlichen Kammerwandung im Nahbereich zur inneren Kammerwandung des Ringraumes angeordnet. Dadurch kann ein vorteilhaft direkter Auftrag auf der Strangoberfläche erfolgen. Der Einlauf der Aufnahmekammer ist derart an der äußeren Umfangsfläche bzw. Kammerwandung des Ringraumes ausgebildet dass beim Einströmen des Hüllmaterials in den Ringraum zunächst eine Bewegung mit einer vornehmlich rotatorischen Bewegungskomponente erzeugt ist. Das sich auf einer Art Kreisbahn um die Längsachse bewegende Hüllmaterial erhält dann zusätzlich zu der rotatorischen Bewegungskomponente eine axiale Bewegungskomponente. Somit vollzieht das Hüllmaterial über wenigstens einen Abschnitt in Längsrichtung der Aufnahmekammer eine spiralförmige Bewegung um deren Längsachse und insbesondere um die innere Kammerwandung der Aufnahmekammer herum.

In einer bevorzugten Ausführungsform der erfindungsgemäßen Vorrichtung erstreckt sich die Aufnahmekammer entlang mindestens eines Abschnittes der Förderleitung, wobei mittels des Förderleitungsabschnittes wenigsten die innere Kammerwandung der Aufnahmekammer ausgebildet ist. Neben der Rohrwanderung für die Zwangsführung der zu einem Strang zu formenden pastösen Masse ist über die Förderleitung, insbesondere einen Förderleitungs-Abschnitt, auch die innere Kammerwandung der Aufnahmekammer ausgebildet. Damit ist eine konstruktiv vereinfachte Ausgestaltung des Extrusionskopfes erreicht, der sich demzufolge auf vorteilhafte Weise herstellen lässt.

Darüber hinaus sind die äußere Kammerwandung mittels eines die Förderleitung konzentrisch im Abstand ummantelnden Rohrkörpers und wenigstens eine der seitlichen Kammerwandungen der Aufnahmekammer durch ein am Rohrkörper stirnseitig angeordnetes, radial nach innen verlaufendes Wandungsteil ausgebildet. Zudem ist der Rohrkörper eingerichtet mit einem Förderleitungs-Abschnitt verschraubt zu werden. Solche insbesondere achssymmetrischen Bauteile lassen sich mit Hilfe vorteilhafter Bearbeitungsverfahren herstellen, wie z.B. zerspanender Fertigungsverfahren. Das Ausbilden einer Verschraubung zwischen der Förderleitung und dem zumindest die äußere Kammerwandung ausbildenden Rohrkörper, stellt eine optimale Möglichkeit dar, um Bauteile vorteilhaft einfach miteinander verbinden zu können. Die Förderleitung ist insbesondere mit einem Außengewinde und das Rohrstück ist mit einem korrespondierenden Innengewinde ausgerüstet.. Zudem lässt sich über eine Verschraubung eine vorteilhafte mediendichte Verbindung zwischen Förderleitung und Rohrkörper gewährleisten. Der Rohrkörper ist ein zylindrisches Rohrstück und das Wandungsteil ein zylindrischer Scheibenkörper mit einem mittig angeordneten Durchbruch.

Der Auslauf der Aufnahmekammer ist insbesondere dem Förderleitungs-Auslass zugeordnet, wodurch der aus der Förderleitung austretende Strang mit Vorteil unmittelbar mit dem aus dem Auslauf austretenden Hüllmaterial aus z. B. Kollagen oder Alginat überzogen werden kann. Durch das direkt nach dem Austritt aus der Förderleitung aufgetragene Hüllmaterial wird dem Strang zusätzlich Festigkeit verliehen. Ein unbeabsichtigter Strangbruch kann dadurch auf vorteilhafte Weise vermieden werden. Das Hüllmaterial ist während seiner Verarbeitung noch gelartig beziehungsweise fließfähig. Seine feste Konsistenz erhält das Hüllmaterial nach dem Auftrag nach einer gegebenenfalls notwendigen Trocknungs- oder Aushärtzeitdauer.

Vorzugsweise ist der Auslauf ein Ringspalt, der sich in axialer Richtung zwischen dem Endabschnitt der Förderleitung und dem im Abstand dazu angeordneten in radialer Richtung verlaufenden Wandungsteil des Rohrkörpers erstreckt. Über dem Ringspalt, der entlang seines Umfanges ein vorzugsweise gleichmäßiges Spaltmaß aufweist, ist ein relativ einfacher Austrag bzw. ein Ausbringen des Hüllmaterials aus der Aufnahmekammer gewährleistet. Der Endabschnitt der Förderleitung steht dabei zumindest bereichsweise in den Durchbruch des Wandungsteiles vor. Das Spaltmaß richtet sich dabei insbesondere nach dem Abstand zwischen dem Endabschnitt der Förderleitung und dem Öffnungsmaß des Durchbruches im Wandungsteil. Anstelle eines ausschließlich sich in axialer Richtung erstreckenden Ringspaltes ist es im Rahmen der Erfindung selbstverständlich auch möglich, dass der Ringspalt über einen vorbestimmten Bereich auch in radialer Richtung verläuft. Damit lässt sich insbesondere ein auf die Strangoberfläche gerichtetes Zuführen des Hüllmateriales verwirklichen. Dass an der Stirnseite des Rohrkörpers angeordnete Wandungsteil kann zu diesem Zweck mit einem Vorsprung ausgerüstet sein, der im Rahmen seines zentrisch angeordneten Durchbruches einen umlaufend nach innen vorstehenden und gleichzeitig axialen Versatz aufweist.

Die Höhe des Ringraumes zwischen der äußeren und inneren Kammerwandung wird so gewählt, dass eine vorteilhafte Umlenkung des in die Aufnahmekammer eintretenden Hüllmaterials in eine vornehmlich rotatorische beziehungsweise kreisförmige Bewegung um die Längsachse der Aufnahmekammer gewährleistet ist und eine vorzugsweise gleichmäßige Verteilung des Hüllmaterials erfolgt. Darüber hinaus ist innerhalb der Aufnahmekammer eine gleichmäßige Druckverteilung über den gesamten Ringraum bewirkt. Das führt mit Vorteil zu einem gleichmäßigen Austritt des Hüllmateriales über den gesamten Ringspalt an einer Stirnseite der Aufnahmekammer.

Nach einer anderen Weiterbildung der Erfindung ist vorgesehen, dass die Förderleitung einen sich in Fließrichtung der pastösen Masse verjüngenden Einlaufabschnitt aufweist. Die Förderleitung kann zu diesem Zweck ein Verdichter-Rohr sein, das einen Abschnitt mit einem sich in Strömungs- oder Fließrichtung der pastösen Masse verringernden Rohrquerschnitt aufweist. Stromauf- und/oder stromabwärts des sich verändernden Einlaufquerschnittes weist das Verdichter-Rohr jeweils gleichbleibende Rohrquerschnitte auf. Speziell der nach dem Einlaufabschnitt angeordnete Rohrquerschnitt dient zum Führen der dann zu einem Strang geformten pastösen Masse.

Ein weiterer Aspekt der Erfindung betrifft eine Maschine zum Herstellen von Würstchen aus einer pastösen Masse, insbesondere aus Wurstbrät, mit einem Fülltrichter zum Aufnehmen der pastösen Masse, einer Förderpumpe zum Fördern der pastösen Masse, mit einer Vorrichtung zum Herstellen eines Stranges aus einer pastösen Masse nach einem der Ansprüche 1 bis 15, und vorzugsweise mit mindestens einer Abteileinrichtung zum Abteilen des geformten und mit einem Hüllmaterial überzogenen Stranges in einzelne Abschnitte unter Bildung einer Abteilstelle.

An einer mit einer derartig erfindungsgemäß ausgebildeten Vorrichtung zur Strangherstellung ausgerüsteten Maschine zum Herstellen von Würstchen ist, aufgrund der erfindungsgemäßen Hüllmaterial-Zufuhr ein verbesserter Herstellungsprozess der Würstchen gewährleistet. Die erzeugten Würstchen weisen eine vorteilhaft gleichmäßig dicke Hülle zum Ummanteln der das Würstchen im Wesentlichen ausbildenden Fleischmasse auf. Ein Bruch des bei der Herstellung der Würstchen erzeugten Stranges ist durch das vorteilhaft gleichmäßig aufgetragene Hüllmaterial vermieden, wodurch der Anteil an Fehlproduktionen auf ein vorteilhaft geringes Maß vermindert ist. Mit der erfindungsgemäßen Vorrichtung zur Strangherstellung lassen sich die verschiedenartigen fließfähigen Hüllmaterialien gänzlich unabhängig von ihren jeweiligen Viskositäten auf die erzeugte Strangoberfläche auftragen. In der Regel ist das auf die Strangoberfläche aufgetragene Hüllmaterial mithilfe einer Verfestigungseinrichtung nachbehandelt, welche der Vorrichtung zur Strangherstellung unmittelbar nachgeschaltet sein kann. Somit erfolgt das Abteilen der einzelnen Strangabschnitte erst nach dem Verfestigen des Hüllmateriales.

Bei einem erfindungsgemäßen Verfahren zum Herstellen von einem Strang aus einer pastösen Masse, wie Wurstbrät oder dergleichen, bei dem die pastöse Masse insbesondere Wurstbrät, zu einem Strang vorbestimmter Länge geformt wird, und dann der Strang zumindest mit einem Hüllmaterial überzogen wird, ist erfindungsgemäß vorgesehen, dass das Hüllmaterial vor dem Auftragen auf die Strangoberfläche beim Durchströmen einer Aufnahmekammer für das Hüllmaterial in eine Bewegung mit zumindest einer rotatorischen Bewegungskomponente um zumindest eine Längsachse der Aufnahmekammer herum versetzt wird.

Durch das Erzeugen einer Vorzugsrichtung des sich durch die Aufnahmekammer am Extrusionskopf bewegenden Hüllmaterials ist ein vorteilhaft gleichmäßiger Druck innerhalb der gesamten Aufnahmekammer erzeugt, wodurch das Hüllmaterial stets gleichmäßig über den Auslass der Aufnahmekammer austreten kann. Damit ergibt sich der Vorteil einer gleichmäßigen Schichtdicke des Hüllmaterials auf dem erzeugten Strang, so dass Bereiche mit einer übermäßigen Hüllendicke oder gar Bereiche, die unzureichend oder gar nicht mit dem Hüllmaterial überdeckt sind, vermieden sind. Mit einem derartig erfindungsgemäßen Verfahren ist die Prozesssicherheit deutlich erhöht beziehungsweise verbessert. Somit kann ein Verfahren zum Herstellen von Würstchen mit einer deutlich verringerten Fehlerquote bei der Herstellung umgesetzt werden.

Die Erfindung wird im Folgenden anhand der bevorzugten Ausführungsform und unter Bezugnahme auf die beiliegenden Figuren näher beschrieben. Hierbei zeigen:

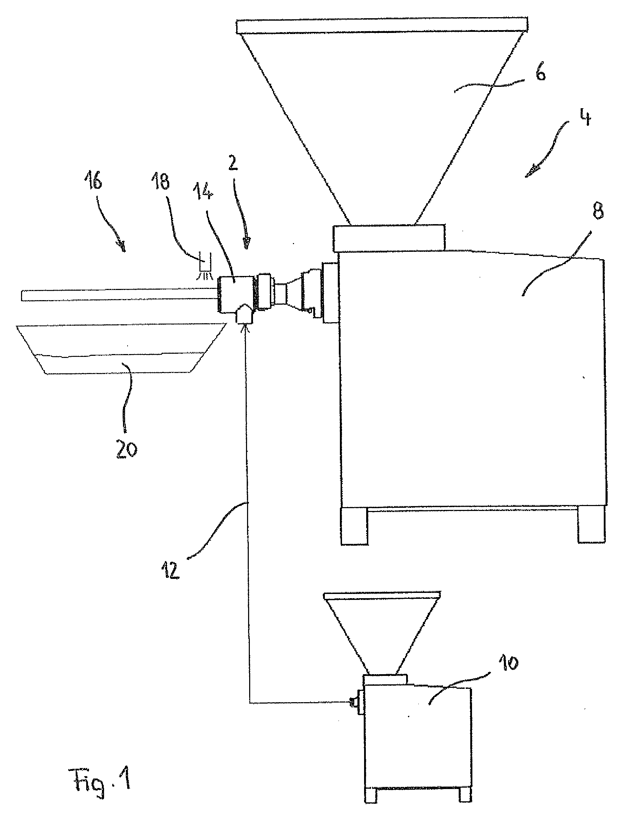

Fig. 1 eine schematische Ansicht einer Vorrichtung zum Herstellen von Würstchen;
Fig. 2 eine Ansicht einer erfindungsgemäßen Vorrichtung zum Herstellen eines Stranges aus einer pastösen Masse als Schnittdarstellung entlang II - II in Fig.3, und
Fig. 3 eine Ansicht der erfindungsgemäßen Vorrichtung nach Fig. 2 quer zur Längsachse.

Mit 2 ist eine Vorrichtung zum Herstellen eines Stranges aus einer pastösen Masse bezeichnet, welche Teil einer typischen Füll-Maschine 4 zum Herstellen von Würstchen ist. Die Maschine 4 umfasst weiterhin einen Fülltrichter 6 und eine in einem Gehäuse 8 angeordnete, nicht näher dargestellte Förderpumpe. Die Förderpumpe kann beispielsweise einen Schneckenantrieb aufweisen, mittels dem die im Fülltrichter 6 befindliche pastöse Masse in Richtung der Vorrichtung 2 zur Strangherstellung transportiert wird.

Mit der Vorrichtung 2 zur Strangherstellung ist ein Gerät 10, eine Maschine, die eine typische Füllmaschine sein kann, zur Herstellung beziehungsweise Aufbereitung von Hüllmaterial, insbesondere Alginat oder Kollagen, über eine Versorgungsleitung 12 medienleitend verbunden. Die Vorrichtung 2 weist einen Extrusionskopf 14 auf, innerhalb dem die pastöse Masse zu einem Strang geformt wird. Gleichzeitig wird das im Gerät 10 erzeugte Hüllmaterial über den Extrusionskopf 14 auf die Strangoberfläche aufgebracht. Dem Extrusionskopf 14 ist wenigstens eine Verfestigungseinrichtung 16 nachgeordnet, mittels der das auf der Strangoberfläche aufgebrachte Hüllmaterial in verkürzter Zeit ausgehärtet wird. Die Verfestigungseinrichtung 16 weist zu diesem Zweck einen Sprühkopf 18 auf, mit dem eine Lösung auf das Hüllmaterial aufgebracht wird. Desweiteren ist ein Auffangbehälter 20 Teil der Verfestigungseinrichtung, der die überflüssig aufgetragene Lösung wieder auffängt. Mit dem verfestigten Hüllmaterial erhält der Strang eine Festigkeit, wodurch ein ungewollter Strangbruch vermieden ist. Die Maschine 4 kann des Weiteren mit einer nicht näher dargestellten Abteileinrichtung und einer Transporteinrichtung ausgerüstet sein, mit denen ein erzeugter Endlosstrang in Abschnitte vorbestimmter Länge unterteilt wird und die einzelnen Abschnitte dann portionsweise abtransportiert werden.

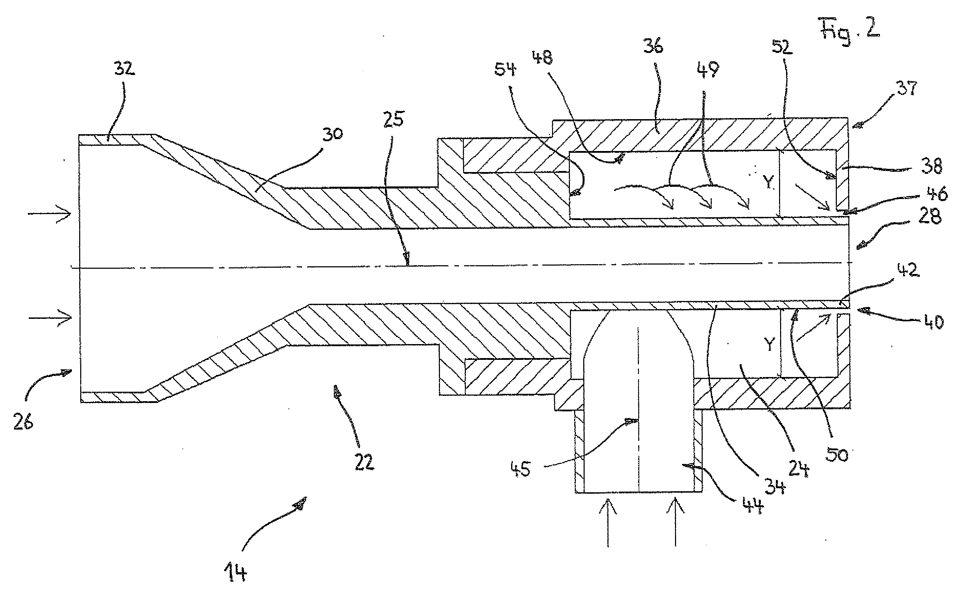

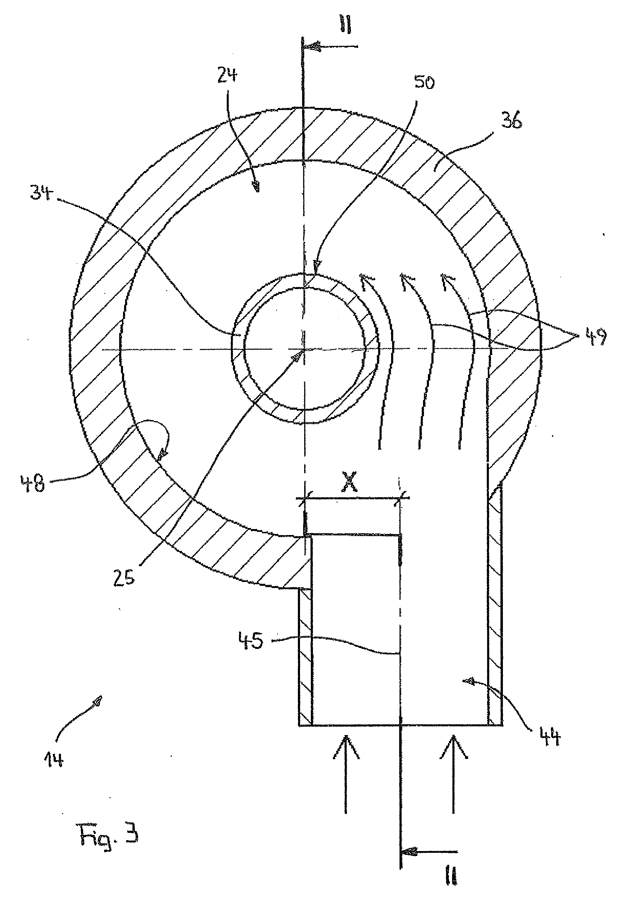

Die Figuren 2 und 3 zeigen Schnittdarstellungen des Extrusionskopfes 14 der erfindungsgemäßen Vorrichtung 2 zur Strangherstellung, wobei der Extrusionskopf 14 wenigstens eine Förderleitung 22 für die zu einem Strang zu formende pastöse Masse und eine Aufnahmekammer 24 für das den geformten Strang umhüllende Hüllmaterial aufweist. Die Förderleitung 22 weist einen Einlass 26 und einen Auslass 28 für die zu einem Strang zu formende pastöse Masse sowie einen sich im Querschnitt verjüngenden Einlaufabschnitt 30 auf. An dem Einlaufabschnitt 30 sind stromaufwärts sowie stromabwärts jeweils Leitungsabschnitte 32, 34 mit gleichbleibenden Querschnitten einstückig angeformt. Der Leitungsabschnitt 34 ist zumindest bereichsweise von einem konzentrisch zur Förderleitung 22 angeordneten Rohrkörper 36 ummantelt. An der Stirnseite 37 des Rohrkörpers 36, die dem Auslass 28 der Förderleitung 22 zugeordnet ist, ist ein radial nach innen verlaufendes Wandungsteil 38 mit einem Durchbruch 40 angeordnet. Dabei ragt der Endabschnitt 42 der Förderleitung 22 wenigstens bereichsweise in den Durchbruch 40 hinein.

Der zwischen der Förderleitung 22 und dem Rohrkörper 36 mit seinem Wandungsteil 38 vorhandene Ringraum dient als Aufnahmekammer 24 für das Hüllmaterial, wobei die Aufnahmekammer einen Einlauf 44 und einen Auslauf 46 aufweist. Der Einlauf 44 ist insbesondere an der äußeren, durch den Rohrkörper 36 gebildeten, Kammerwandung 48 ausgebildet, wobei, wie die Fig. 3 zeigt, der Einlauf asymmetrisch an der äußeren Kammerwandung angeordnet ist. Die Mittenachse 45 des bevorzugt durch ein Rohrstück ausgebildeten Einlaufs 44 weist einen Versatz X zur Längsachse 25 der Aufnahmekammer 24 und damit gleichzeitig auch zur Förderleitung 22 auf. Dadurch wird das über die Versorgungsleitung 12 zum Extrusionskopf 14 geförderte Hüllmaterial beim Eintritt über den Einlauf 44 in die Aufnahmekammer 24 in eine Bewegung mit zumindest einer rotatorischen Bewegungskomponente um zumindest die Längsachse 25 der Aufnahmekammer 24 herum versetzt. Das Hüllmaterial führt, während dieses die Aufnahmekammer 24 vom Einlauf 44 zum Auslauf 46 durchströmt, innerhalb der Aufnahmekammer 24 eine spiralförmige Bewegung (Pfeile 49) um den Bereich des Leitungsabschnittes 34 aus, der die innere Kammerwandung 50 der Aufnahmekammer 24 ausbildet.

Die Mittenachse 45 des Einlaufes 44 weist einen Versatz zur Längsachse 25 der Aufnahmekammer 24 auf, der wenigstens der Hälfte des freien Querschnitts des Einlaufes 44 entspricht. Der Auslauf 46 ist in einer der seitlichen Kammerwanderungen 52, 54 der Aufnahmekammer ausgebildet. Der Auslauf 46 ist in der dem Auslass 28 der Förderleitung zugeordneten Kammerwanderung 52 angeordnet und weist die Form eines Ringspaltes auf. Der Auslauf 46 ist zwischen dem Endabschnitt 42 der Förderleitung 22 und den im Abstand dazu angeordneten, die Kammerwanderung 52 ausbildenden Wandungsteil 38 vorgesehen und erstreckt sich vornehmlich in axialer Richtung. Anstelle eines sich ausschließlich in axialer Richtung erstreckenden Ringspaltes kann das am Rohrkörper 36 stirnseitig angeordnete Wandungsteil 38 einen nicht näher gezeigten, sich radial nach innen und axial nach außen erstreckenden Vorsprung aufweisen.

## Patentansprüche

1. Vorrichtung (2) zum Herstellen eines Stranges aus einer pastösen Masse, wie Wurstbrät oder dergleichen,
mit zumindest einem Extrusionskopf (14),
der wenigstens eine Förderleitung (22) für die zu einem Strang zu formende pastöse Masse aufweist, wobei die Förderleitung (22) einen Einlass (26) und einen Auslass (28) aufweist, und
der eine Aufnahmekammer (24) für ein auf den Strang aufzubringendes Hüllmaterial aufweist, wobei die Aufnahmekammer (24) einen Einlauf (44) für das Hüllmaterial und einen Auslauf (46) zum Aufbringen des Hüllmaterials auf die Strangoberfläche aufweist, **dadurch gekennzeichnet, dass** die Aufnahmekammer Mittel aufweist, die eingerichtet sind, um das Hüllmaterial beim Durchströmen der Aufnahmekammer (24) in eine im Wesentlichen spiralförmige Bewegung mit einer rotatorischen Bewegungskomponente und zusätzlich einer axialen Bewegungskomponente um zumindest eine Längsachse (25) der Aufnahmekammer (24) herum zu versetzen.

2. Vorrichtung (2) nach Anspruch 1,
**dadurch gekennzeichnet, dass** der Einlauf (44) an der äußeren Kammerwandung (48) der Aufnahmekammer (24) angeordnet ist, derart, dass dessen Mittenachse (45) einen Versatz (X) zur Längsachse (25) der Aufnahmekammer (24) aufweist.

3. Vorrichtung (3) nach Anspruch 2,
**dadurch gekennzeichnet, dass** der Versatz (X) zwischen der Mittenachse (45) des Einlaufes (44) und der Längsachse (25) der Aufnahmekammer (24) wenigstens der Hälfte des freien Querschnittes des Einlaufes (44) entspricht.

4. Vorrichtung (2) nach Anspruch 1,
**dadurch gekennzeichnet, dass** im Einlaufbereich der Aufnahmekammer (24) wenigstens ein Umlenkelement zum Erzeugen der teilweise rotatorischen Bewegung des in die Aufnahmekammer (24) eingeführten Hüllmaterials angeordnet ist.

5. Vorrichtung (2) nach Anspruch 4,
**dadurch gekennzeichnet, dass** das Umlenkelement in einem Endbereich innerhalb des Einlaufes oder mindestens teilweise in die Aufnahmekammer (24) vorstehend am Einlauf angeordnet ist.

6. Vorrichtung (2) nach einem der Ansprüche 4 und 5,
**dadurch gekennzeichnet, dass** das Umlenkelement als Leitschaufel mit einer konkav gewölbten Leitfläche ausgebildet ist.

7. Vorrichtung (2) nach einem der Ansprüche 4 bis 6,
**dadurch gekennzeichnet, dass** der Einlauf ein sich im wesentlichen radial zur Längsachse (25) der Aufnahmekammer (24) erstreckender Anschlussstutzen ist.

8. Vorrichtung (2) nach einem der Ansprüche 4 bis 7,
**dadurch gekennzeichnet, dass** der Einlauf im Einlaufbereich der Aufnahmekammer (24) ein um ein vorbestimmtes Winkelmaß gekrümmtes oder abgewinkeltes Teilstück umfasst, wobei die Zentralachse des gekrümmten oder abgewinkelten Teilstückes etwa quer zur Längsachse (25) der Aufnahmekammer (24) ausgerichtet ist.

9. Vorrichtung (2) nach einem der Ansprüche 1 bis 8,
**dadurch gekennzeichnet, dass** der Einlauf (44) mittels eines Rohrstückes ausgebildet ist, wobei das Verhältnis zwischen Außendurchmesser der Aufnahmekammer (24) und Durchmesser des Rohrstückes etwa 2:1 beträgt.

10. Vorrichtung (2) nach einem der Ansprüche 1 bis 9,
**dadurch gekennzeichnet, dass** die Aufnahmekammer (24) die Form eines Ringraumes aufweist, an dessen äußerer Kammerwendung (48) der Einlauf (44) und an dessen einer der seitlichen, kreisringförmigen Kammerwendungen (52, 54) der Auslauf (46) für das Hüllmaterial ausgebildet ist

11. Vorrichtung (2) nach einem der Ansprüche 1 bis 10,
**dadurch gekennzeichnet, dass** die Aufnahmekammer (24) sich entlang mindestens eines Abschnittes der Förderleitung (22) erstreckt, wobei mittels des Förderleitungs-Abschnittes (34) wenigstens die innere Kammerwandung (50) der Aufnahmekammer (24) ausgebildet ist.

12. Vorrichtung (2) nach einem der Ansprüche 1 bis 11,
**dadurch gekennzeichnet, dass** die äußere Kammerwandung (48) der Aufnahmekammer mittels eines die Förderleitung (22) konzentrisch im Abstand ummantelnden Rohrkörpers (36) und wenigstens eine der seitlichen Kammerwandungen (52, 54) der Aufnahmekammer (24) durch ein am Rohrkörper (36) stirnseitig angeordnetes, radial nach innen verlaufendes Wandungsteils ausgebildet sind, wobei der Rohrkörper eingerichtet ist, mit einem Förderleitungs-Abschnitt (34) verschraubt zu werden.

13. Vorrichtung (2) nach einem der Ansprüche 1 bis 12,
**dadurch gekennzeichnet, dass** der Auslauf (46) der Aufnahmekammer (24) dem Förderleitungs-Auslass (28) zugeordnet ist.

14. Vorrichtung (2) nach einem der Ansprüche 1 bis 13,
**dadurch gekennzeichnet, dass** der Auslauf (46) ein Ringspalt ist, der sich in axialer Richtung zwischen dem Endabschnitt (42) der Förderleitung (22) und dem im Abstand dazu angeordneten, in radialer Richtung verlaufenden Wandungsteil (38) des Rohrkörpers (36) erstreckt.

15. Vorrichtung (2) nach einem der Ansprüche 1 bis 14,
**dadurch gekennzeichnet, dass** die Förderleitung (22) einen sich in Fließrichtung der pastösen Masse verjüngenden Einlaufabschnitt (30) aufweist.

16. Maschine zum Herstellen von Würstchen aus einer pastösen Masse, insbesondere aus Wurstbrät,
mit einem Fülltrichter (6) zum Aufnehmen der pastösen Masse,
einer Förderpumpe zum Fördern der pastösen Masse,
mit einer Vorrichtung (2) zum Herstellen eines Stranges aus pastöser Masse nach einem der Ansprüche 1 bis 15, und
vorzugsweise mit mindestens einer Abteileinrichtung zum Abteilen des geformten und mit einem Hüllmaterial überzogenen Stranges in einzelne Abschnitte unter Bildung einer Abteilstelle.

17. Verfahren zum Herstellen von einem Strang aus einer pastösen Masse, wie Wurstbrät oder dergleichen, bei dem
die pastöse Masse, insbesondere Wurstbrät, zu einem Strang vorbestimmter Länge geformt wird, und
dann der Strang zumindest mit einem Hüllmaterial überzogen wird,
**dadurch gekennzeichnet, dass** das Hüllmaterial vor dem Auftragen auf die Strangoberfläche beim Durchströmen einer Aufnahmekammer (24) für das Hüllmaterial in eine im Wesentlichen spiralförmige Bewegung mit einer rotatorischen Bewegungskomponente und zusätzlich einer axialen Bewegungskomponente um zumindest eine Längsachse der Aufnahmekammer herum versetzt wird.

## Claims

1. Apparatus (2) for producing a string of a pasty material like sausage meat or the like comprising
at least an extrusion head (14)
which has at least one conveyor conduit (22) for the pasty material to be shaped into a string, wherein the conveyor conduit (22) has an inlet (26) and an outlet (28), and
which has a receiving chamber (24) for a casing material to be applied to the string, wherein the receiving chamber (24) has an entry (44) for the casing material and an exit (46) for applying the casing material to the string surface, **characterised in that** the receiving chamber has means adapted to impart to the casing material when flowing through the receiving chamber (24) a substantially helical movement having at least a rotatory movement component and additionally an axial movement component about at least a longitudinal axis (25) of the receiving chamber (24).

2. Apparatus (2) as set forth in claim 1 **characterised in that** the entry (44) is arranged at the outer chamber wall (48) of the receiving chamber (24) in such a way that its center line (45) has a displacement (X) relative to the longitudinal axis (25) of the receiving chamber (24).

3. Apparatus 32) as set forth in claim 2 **characterised in that** the displacement (X) between the center line (45) of the entry (44) and the longitudinal axis (25) of the receiving chamber (24) corresponds at least to half the free cross-section of the entry (44).

4. Apparatus (2) as set forth in claim 1 **characterised in that** arranged in the entry region of the receiving chamber (24) is at least one deflection element for producing the partially rotatory movement of the casing material introduced into the receiving chamber (24).

5. Apparatus (2) as set forth in claim 4 **characterised in that** the deflection element is arranged in an end region within the entry or is arranged at least partially projecting into the receiving chamber (24) at the entry.

6. Apparatus (2) as set forth in one of claims 4 and 5 **characterised in that** the deflection element is in the form of a guide vane having a concavely curved guide surface.

7. Apparatus (2) as set forth in one of claims 4 through 6 **characterised in that** the entry is a connecting portion extending substantially radially relative to the longitudinal axis (25) of the receiving chamber (24).

8. Apparatus (2) as set forth in one of claims 4 through 7 **characterised in that** in the entry region of the receiving chamber (24) the entry includes a portion which is curved or angled through a predetermined annular amount, wherein the central axis of the curved or angled portion is oriented approximately transversely relative to the longitudinal axis (25) of the receiving chamber (24).

9. Apparatus (2) as set forth in one of claims 1 through 8 **characterised in that** the entry (44) is formed by means of a tube portion, wherein the ratio between the outside diameter of the receiving chamber (24) and the diameter of the tube portion is about 2:1.

10. Apparatus (2) as set forth in one of claims 1 through 9 **characterised in that** the receiving chamber (24) is in the shape of an annular space, the entry (44) being provided at the outer chamber wall (48) of the annular space and the exit (46) for the casing material being provided at one of the lateral chamber walls (52, 54) which are in the form of a circular ring.

11. Apparatus (2) as set forth in one of claims 1 through 10 **characterised in that** the receiving chamber (24) extends along at least one portion of the conveyor conduit (22), wherein at least the inner chamber wall (50) of the receiving chamber (24) is provided by means of the conveyor conduit portion (34).

12. Apparatus (2) as set forth in one of claims 1 through 11 **characterised in that** the outer chamber wall (48) of the receiving chamber is provided by means of a tubular body (36) which surrounds the conveyor conduit (22) in concentric spaced relationship and at least one of the lateral chamber walls (52, 54) of the receiving chamber (24) is provided by a radially inwardly extending wall portion arranged at the end on the tubular body (36), wherein the tubular body is adapted to be screwed to a conveyor conduit portion (34).

13. Apparatus (2) as set forth in one of claims 1 through 12 **characterised in that** the exit (46) of the receiving chamber (24) is associated with the conveyor conduit outlet (28).

14. Apparatus (2) as set forth in one of claims 1 through 13 **characterised in that** the exit (46) is an annular gap which extends in an axial direction between the end portion (42) of the conveyor conduit (22) and the wall portion (38) of the tubular body (36), which wall portion (38) is arranged at a spacing relative to the end portion (42) and extends in the radial direction.

15. Apparatus (2) as set forth in one of claims 1 through 14 **characterised in that** the conveyor conduit (22) has an entry portion (30) which narrows in the direction of flow of the pasty material.

16. A machine for producing sausages from a pasty material, in particular from sausage meat, comprising
a filling hopper (6) for receiving the pasty material,
a delivery pump for conveying the pasty material,
an apparatus (2) for producing a string of pasty material as set forth in one of claims 1 through 15, and
preferably at least one dividing device for dividing the shaped string covered with a casing material into individual portions with the formation of a division location.

17. A process for producing a string of a pasty material like sausage meat or the like in which
the pasty material, in particular sausage meat, is shaped into a string of predetermined length, and
then the string is covered at least with a casing material,
**characterised in that** before being applied to the string surface when flowing through a receiving chamber (24) for the casing material the casing material is displaced with a substantially helical movement having at least a rotatory movement component and additionally an axial movement component about at least a longitudinal axis of the receiving chamber.

## Revendications

1. Dispositif (2) servant à fabriquer un boudin à partir d'une masse pâteuse, telle que de la chair à saucisse ou similaire,
comprenant au moins une tête d'extrusion (14),
laquelle présente au moins un conduit de transport (22) pour la masse pâteuse à mettre en forme en boudin, dans lequel le conduit de transport (22) présente une entrée (26) et une sortie (28), et
laquelle présente un compartiment de réception (24) pour un matériau d'enveloppement à appliquer sur le boudin, dans lequel le compartiment de réception (24) présente une admission (44) pour le matériau d'enveloppement et une évacuation (46) servant à appliquer le matériau d'enveloppement sur la surface de boudin,
**caractérisé en ce que** le compartiment de réception présente des moyens, qui sont mis au point pour imprimer au matériau d'enveloppement lors de la traversée du compartiment de réception (24) un mouvement sensiblement en forme de spirale avec une composante de mouvement rotatif et avec, en supplément une composante de mouvement axial, tout autour au moins d'un axe longitudinal (25) du compartiment de réception (24).

2. Dispositif (2) selon la revendication 1,
**caractérisé en ce que** l'admission (44) est disposée au niveau de la paroi de compartiment (48) extérieure du compartiment de réception (24), de telle manière que l'axe central (45) de l'admission présente un décalage (X) par rapport à l'axe longitudinal (25) du compartiment de réception (24).

3. Dispositif (3) selon la revendication 2,
**caractérisé en ce que** le décalage (X) entre l'axe central (45) de l'admission (44) et l'axe longitudinal (25) du compartiment de réception (24) correspond au moins à la moitié de la section transversale libre de l'admission (44).

4. Dispositif (2) selon la revendication 1,
**caractérisé en ce qu'**au moins un élément de déviation servant à produire le mouvement en partie de rotation du matériau d'enveloppement introduit dans le compartiment de réception (24) est disposé dans la zone d'admission du compartiment de réception (24).

5. Dispositif (2) selon la revendication 4,
**caractérisé en ce que** l'élément de déviation est disposé au niveau de l'admission de manière à faire saillie dans une zone d'extrémité à l'intérieur de l'admission ou au moins en partie dans le compartiment de réception (24).

6. Dispositif (2) selon l'une quelconque des revendications 4 et 5,
**caractérisé en ce que** l'élément de déviation est réalisé sous la forme d'une pale directrice présentant une surface directrice bombée de manière concave.

7. Dispositif (2) selon l'une quelconque des revendications 4 à 6,
**caractérisé en ce que** l'admission est une tubulure de raccordement s'étendant sensiblement de manière radiale par rapport à l'axe longitudinal (25) du compartiment de réception (24).

8. Dispositif (2) selon l'une quelconque des revendications 4 à 7,
**caractérisé en ce que** l'admission comprend dans la zone d'admission du compartiment de réception (24) une pièce partielle incurvée ou coudée selon un angle présentant une valeur prédéfinie, dans lequel l'axe central de la pièce partielle incurvée ou coudée est orienté approximativement de manière transversale par rapport à l'axe longitudinal (25) du compartiment de réception (24).

9. Dispositif (2) selon l'une quelconque des revendications 1 à 8,
**caractérisé en ce que** l'admission (44) est réalisée au moyen d'une pièce tubulaire, dans lequel le rapport entre le diamètre extérieur du compartiment de réception (24) et le diamètre de la pièce tubulaire est d'environ 2:1.

10. Dispositif (2) selon l'une quelconque des revendications 1 à 9,
**caractérisé en ce que** le compartiment de réception (24) présente la forme d'un espace annulaire, au niveau de la paroi de compartiment extérieure (48) duquel l'admission (44) est réalisée et au niveau d'une des parois de compartiment (52, 54) latérales de forme circulaire, l'évacuation (46) pour le matériau d'enveloppement est réalisée.

11. Dispositif (2) selon l'une quelconque des revendications 1 à 10,
**caractérisé en ce que** le compartiment de réception (24) s'étend le long au moins d'une section du conduit de transport (22), dans lequel au moins la paroi de compartiment (50) intérieure du compartiment de réception (24) est réalisée au moyen de la section de conduit de transport (34).

12. Dispositif (2) selon l'une quelconque des revendications 1 à 11,
**caractérisé en ce que** la paroi de compartiment (48) extérieure du compartiment de réception est réalisée au moyen d'un corps tubulaire (36) entourant à distance de manière concentrique le conduit de transport (22) et qu'au moins une des parois de compartiment (52, 54) latérales du compartiment de réception (24) est réalisée par une partie de paroi disposée côté frontal au niveau du corps tubulaire (36), s'étendant radialement vers l'intérieur, dans lequel le corps tubulaire est mis au point afin d'être vissé à une section de conduit de transport (34).

13. Dispositif (2) selon l'une quelconque des revendications 1 à 12,
**caractérisé en ce que** l'évacuation (46) du compartiment de réception (24) est associée à la sortie de conduit de transport (28).

14. Dispositif (2) selon l'une quelconque des revendications 1 à 13,
**caractérisé en ce que** l'évacuation (46) est une fente annulaire, qui s'étend dans une direction axiale entre la section d'extrémité (42) du conduit de transport (22) et la partie de paroi (38) disposée à distance de cette dernière, s'étendant dans une direction radiale, du corps tubulaire (36).

15. Dispositif (2) selon l'une quelconque des revendications 1 à 14,
**caractérisé en ce que** le conduit de transport (22) présente une section d'admission (30) se rétrécissant dans la direction d'écoulement de la masse pâteuse.

16. Machine servant à fabriquer des saucisses à partir d'une masse pâteuse, en particulier à partir de chair à saucisse,
comprenant une trémie de remplissage (6) servant à recevoir la masse pâteuse,
une pompe de transport servant à transporter la masse pâteuse,
un dispositif (2) servant à fabriquer un boudin à partir d'une masse pâteuse selon l'une quelconque des revendications 1 à 15, et
de préférence au moins un système de division servant à diviser le boudin mis en forme et recouvert d'un matériau d'enveloppement en diverses sections en formant un point de division.

17. Procédé servant à fabriquer un boudin à partir d'une masse pâteuse, telle que de la chair à saucisse ou similaire, dans le cadre duquel
la masse pâteuse, en particulier la chair à saucisse, est mise en forme en un boudin de longueur prédéfinie, et
le boudin est alors recouvert au moins d'un matériau d'enveloppement,
**caractérisé en ce que** le matériau d'enveloppement se voit imprimer, avant l'application sur la surface de boudin, lors de la traversée d'un compartiment de réception (24) pour le matériau d'enveloppement, un mouvement sensiblement en forme de spirale avec une composante de mouvement de rotation et avec, en supplément, une composante de mouvement axial tout autour au moins d'un axe longitudinal du compartiment de réception.
